# EUROPEAN PATENT SPECIFICATION

(11) **EP 1 509 051 B1**
(45) Date of publication and mention of the grant of the patent: **15.08.2012**
(21) Application number: 04103538.7
(22) Date of filing: 23.07.2004
(51) Int. Cl.: H04W 16/26, H04B 7/155

(54) **Wireless communication system and wireless communication repeater for use therein**
Funkkommunikationsystem und dafür geeignete drahtlose Relaisstation
Système de transmission sans fil et une station relais radio pour utilisation dans un tel système

(30) Priority: 21.08.2003 GB 3196839
(43) Date of publication of application: 23.02.2005
(73) Proprietor: Motorola Solutions Israel Limited, 70199 Airport City (IL)
(72) Inventor: Ofir, Gabi, 67899, Tel Aviv (IL); Dory, Dan, 67899, Tel Aviv (IL); Suplin, Anatoliy, 67899, Tel Aviv (IL)
(74) Representative: Treleven, Colin

(56) References cited:
- EP-A- 1 143 641
- WO-A-01/05092
- WO-A-01/15374
- WO-A-01/99444
- WO-A-95/24655
- JP-A- 8 275 245

## Description

### Field of the Invention

This invention relates to a wireless communication system and a wireless communication repeater for use therein.

### Background of the Invention

Wireless communication systems, for example cellular telephony or private mobile radio (PMR) communication systems, typically provide for radio telecommunication links to be arranged between two (or more) subscriber units. Wireless communication systems are distinguished over fixed communication systems, such as the public switched telephone network (PSTN), principally in that subscriber units move between communication service areas and providers, and in doing so encounter varying radio propagation environments. Therefore, the quality of a communication link to/from a subscriber unit varies as the subscriber unit changes location. The subscriber units are typically either vehicular-mounted 'mobile' or 'hand-portable' radio or cellular units. Henceforth, the term 'mobile station' ('MS') will be used for all such subscriber units.

In wireless communication systems, there are two basic methods of communicating between MSs. A first method is a direct communication between (at least) two MSs, as provided for in direct-mode (DM) communication in a private mobile radio (PMR) communication system. A second method uses a fixed infrastructure including one or more intermediary stations to forward a received communication from a first MS to at least one second MS, as provided in trunked mode of operation (TMO).

The European Telecommunication Standards Institute (ETSI) has defined industry standards which specify how a digital PMR communication system should operate. The system specified by these standards is known as the Terrestrial Trunked Radio (TETRA) communication system. The TETRA TMO system is in practice a very complex system, involving many nodes on many hierarchical levels, with both wireline and wireless links interconnecting them. In a trunked system, the intermediary station is generally a base transceiver station (BTS) connected to the switching and management infrastructure (SwMI) of the communication system. In such systems, the BTS is generally considered to be an "intelligent" terminal, as it has the processing and control functionality to influence a substantial amount of the communication traffic passing through it.

Ideally, all systems would be developed to provide a fully functional TMO system, offering all of the functionality possible with such complex communications. However, the provision of a standard, fully fledged TMO network is far too expensive for a large number of customers/operators, particularly in providing coverage in rural disparate areas.

Furthermore, the present inventors have appreciated that there are many situations where a less-rigid and less-complex network would suffice in being able to support the limited communication requirements in a particular area, for example, when a number of user features need not be supported.

Thus, there currently exists a need to provide a communication system and a wireless communication unit to support communications where the aforementioned disadvantages associated with known communications may at least be alleviated.

WO 01/15374 A1 describes a method of transmitting wireless messages in a communication system. In a first mode messages are transmitted from a first transceiver unit to a second transceiver unit by sequential transmission, e.g. around a closed loop, via at least one transceiver unit. The transceiver units are simple units suitable for relaying messages in a security or fire alarm system.

WO 01/05092 A1 describes a network for carrying out control, sensing and data communications. Nodes used in the network can be connected in a loop arrangement. Connections are provided by conductors, e.g. twisted conductor pairs or coaxial cables.

### Summary of the invention

In accordance with a first aspect of the present invention, there is provided a wireless communication system in accordance with claim 1 of the accompanying claims.

In accordance with a second aspect of the present invention there is provided a wireless communication repeater according to claim 14 of the accompanying claims. The wireless repeater communication unit is capable of providing direct mode communication resource to a plurality of wireless subscriber communication units operating in a direct mode in a coverage area. The wireless repeater communication unit is operably coupled to a plurality of other wireless repeater communication units to form a closed loop communication path. The wireless repeater communication unit comprises, as a minimum, a receiver for receiving communications from a preceding wireless repeater communication unit in the closed loop communication path; a signal processor for processing the received communication; and a transmitter for re-transmitting the processed communication to a subsequent wireless repeater communication unit in the closed loop communication path. Notably, the signal processor modifies the communication to indicate a position of the wireless repeater communication unit in the plurality of wireless repeater communication units in the closed loop communication path.

In accordance with a third aspect of the present invention, there is provided a method of operation in a wireless communication system, the method being in accordance with claim 15 of the accompanying claims.

Further features of the invention are as provided in the dependent Claims.

A radio repeater station is a known communications terminal which performs a minimal amount of processing in receiving a communication from a first MS and retransmitting the received communication to at least one second MS. As a repeater station has little influence on the communication traffic passing through it, it is often termed a "dummy" terminal. A direct mode repeater provides in the prior art a means for direct mode MSs wishing to communicate over an enlarged direct mode coverage area, for example to provide communication coverage to a MS that is operating outside of a dedicated TMO network coverage area. It is known that direct mode repeaters may be mobile or fixed and may operate using either a single dedicated frequency or two dedicated frequencies. A known technique for operation via a DMO Repeater has been defined by the European Telecommunication Standards Institute (ETSI) in the TErrestrial Trunked RAdio (TETRA) standard in ETS-300-396-4.

However, communications systems and Repeaters for use therein in accordance with the present invention are novel and beneficial. By provision of a closed loop wireless repeater network, a wireless Repeater-based network is able to behave in a similar manner to a trunked mode system, albeit with less functionality and control, but with more flexibility of use, less system complexity and lower cost. Thus, the novel Repeater-based network is suitable for use in a number of applications.

The primary difference between the repeater chain used in embodiments of the invention and a chain of BTSs in a known trunked system is that the entire repeater chain is passive. For example, there is no "Control Channel" whereby each MS must synchronize to and adhere to directions from the system infrastructure using messages on the control channel. Thus, in embodiments of the invention, the initiating MS becomes the master of the communication link, i.e. controls the communication channel. A summary of the distinguishing features of the system/repeater used in embodiments of the present invention (compared to a known trunked system) is as follows:
1. The communication system is asynchronous.
2. There is no need for continuous transmission (via a dedicated Control Channel)
3. The repeater functions essentially as a relay device.
4. No hierarchy among repeaters is needed.
5. All repeaters are preferably mobile equipment and are therefore relocatable in the field.
6. The repeaters can be inconspicuous in terms of both the level of RF transmissions (RF) and the environmental topology.

The closed loop wireless repeater network according to the invention may be configured such that one wireless repeater communication unit receives transmissions from a preceding wireless repeater communication unit in the loop on a first frequency (f1) and transmits to a subsequent wireless repeater communication unit in the loop on a second frequency (f2), which is the receive frequency of the subsequent wireless repeater communication unit. In this manner, a wide variety of flexible and dynamically adjustable communication chains/links can be established.

Preferably, when the wireless repeater communication units are mobile, for example by mounting them on a vehicle, the wireless repeater-based network is very adaptable to changing communication environments.

Furthermore, by providing for a chain of such wireless repeater communication units in a closed loop configuration, the repeater-based network can be readily expanded/reduced, by adding or removing DM-Repeaters, according to the communication system's needs at any particular time.

Preferably, a minimum of resources is used by such a network when it is configured to support frequency reuse. Advantageously, the DM-Repeater network can be easily configured and deployed in the field, can provide essential backup communication support in times of crisis, e.g. when a major SwMI like system either partially or fully fails due to hostile activity, and/or can be quickly deployed aboard sea vessels at sea, where no Trunked system may be practically installed.

Thus, a wireless repeater-based network offers customers with modest means, the opportunity to acquire and operate a relatively simple low-cost, re-configurable. communication network. Such a system is readily deployable in many environmental situations and can quickly become operational.

Exemplary embodiments of the present invention will now be described, with reference to the accompanying drawings, in which:

### Brief Description of the Drawings

FIG. 1 is a schematic block diagram of a direct mode radio communication system supporting the various inventive concepts of an embodiment of the present invention; and
FIG. 2 is a schematic block diagram of a wireless repeater communication unit adapted to support the inventive concepts of embodiments of the present invention.

### Description of embodiments of the present invention

In summary, according to the preferred embodiment of the present invention, a network of DM repeater communication units, such as the TETRA Type-1B DM Repeater, is deployed in order to provide a SwMI-like DMO-based communication system. In this manner, the network of Type 1B DM-Repeater communication units facilitates a readily resizable Network offering transportable network services. In this regard, "transportable" implies the dynamic nature of the proposed system, in that individual repeaters can be mounted on land vehicles and aboard sea vessels and be relocated, even during active service, without disrupting the service continuity.

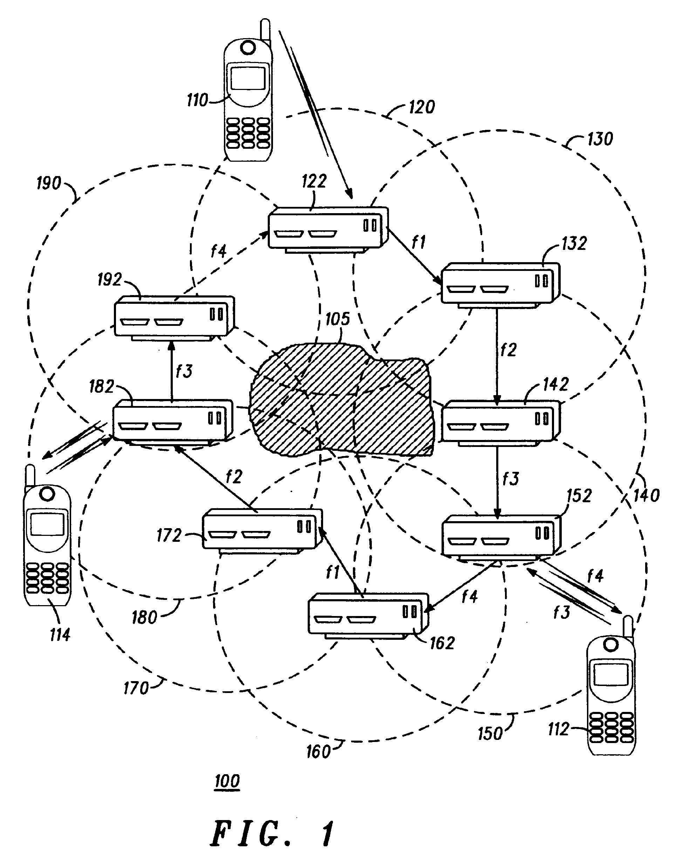

Referring first to FIG. 1, a communication network 100 of DM repeaters is illustrated, in accordance with the preferred embodiment of the present invention. The communication network 100 may comprise an area 105, where TMO communication is then supported. Additional communication support is then provided by a network of DM Repeaters 122, 132, 142, 152, 162, 172, 182 and 192.
Each of the DM Repeaters 122, 132, 142, 152, 162, 172, 182 and 192 supports communication in respective coverage areas 120, 130, 140, 150, 160, 170, 180 and 190.

In this configuration, it can be seen that the use of a number of concatenated DM-Repeater units can be used to expand the communication network. A skilled artisan will appreciate that, in other scenarios, area 105 may be for example a lake, where no communication coverage may be required. In this case, the DM-Repeater cells form the whole of the communication network. Alternatively, in another scenario, the DM-Repeater network may be configured to have no such area 105, i.e. all of the DM-Repeater cells are configured to overlap. Again, in this configuration the DM-Repeater cells form the whole of the communication network.

In accordance with the preferred embodiment of the present invention, each of the DM Repeaters 122, 132, 142, 152, 162, 172, 182 and 192 is operably coupled to two other DM Repeaters in a chain-like manner. The coupling of the DM Repeaters is configured such that a DM Repeater receives communication on a transmit frequency of the preceding DM Repeater in the chain, and transmits on a different frequency.

All MSs supported by Repeater 'A' 122 transmit on a unique designated frequency, here termed f4. Thus, f4 is Repeater 'A's receiving frequency for all communication. Repeater 'A' transmits on a separate dedicated frequency f1. These two frequencies are sufficiently separated to allow the DM-Repeater unit to perform adequate RF filtering between respective transmit and receive signals.

A MS wishing to initiate a call on the extended DM-Repeater network is termed a Master MS 110, and its serving Repeater referred to as the Master Repeater. In the illustrated case, Repeater 'A' 122 is the Master Repeater. A called MS on the extended DM-Repeater network is termed a Slave MS. In operation, in the illustrated case, two MSs have been requested to participate in a call, MS 112 and MS 114. The Slave MSs are supported by their respective serving Slave Repeaters, i.e. Repeater 'D' 152 and Repeater 'G' 182.

Thus, let us assume that Master MS 110 initiates a call request to Slave MSs 112 and 114. The call request is transmitted to Repeater 'A' 122 on f4 - the dedicated receive frequency of Repeater 'A' 122, thereby identifying the Repeater as the Master Repeater. The Master Repeater 122 receives processes and re-transmits the communication to other DM Repeater units down the communication chain, i.e. via Repeater 'B' 132, if any of the called parties are not currently supported by Master Repeater 'A' 122.

The transmission from Master Repeater 'A' 122 to Repeater 'B' 132 is performed on Master Repeater 'A's transmit frequency, which is configured to be the same as Repeater 'B's receive frequency, f1. Neither of the called MSs 112, 114 is supported by Repeater 'B' 132, so the communication is re-transmitted to DM Repeater units further down the communication chain, i.e. via Repeater 'C' 142. The transmission from Repeater 'B' 132 to Repeater 'C' 142 is performed on Repeater 'B's transmitting frequency, which is configured to be the same as Repeater 'C's receiving frequency, f2. Again, neither of the called MSs 112, 114 is supported by Repeater 'C' 142, so the communication is re-transmitted to DM Repeater units further down the communication chain, i.e. via Repeater 'D' 152.

Repeater 'D' 152 receives and processes the call request, and identifies that one of its served MSs, namely Slave-1 MS 112, is a called party. Therefore, Repeater 'D' 152 re-formats and re-transmits the call request to Slave-1 MS on its transmit frequency f4. Concurrently, Repeater 'D' 152 re-formats and re-transmits the call request to Slave-2 on its transmit frequency f4 via the next Repeater in the chain, i.e. Repeater 'E' 162.

In this manner, a communication request is routed to all called MS(s) to set- up a call. Slave-1 MS 112 will respond to the call request on its serving DM-Repeater's (i.e. Repeater 'D' 152) receive frequency, f3. The response will then be routed from Repeater D 152 to the Master MS 110 via the intermediary DM Repeater units 162, 172, 182 and 192, as well as via the Master DM Repeater unit 122.

Once the call request reaches Repeater 'G' 182, the other (remaining) called party, i.e. Slave-2 MS 114, is able to receive and respond to the call request. Slave-2 MS 114 communicates its participation in the call via its serving Repeater, i.e. Repeater 'G' 182. The call acceptance is routed around the closed loop of DM-Repeaters. In this manner, the final DM-Repeater in the loop, Repeater 'H' 192, will forward call acceptance messages from Slave MS(s) to the Master Repeater 'A' 122 and thereon to Master MS 110.

It is noteworthy that the DM-Repeater network is preferably configured such that call acceptance messages comprise only requests for taking over the call, i.e. Pre-emption and Changeover requests, and not the messages originated by the Master MS 110, lest the transmission from Repeater 'H' coincide with the original transmission from the Master MS 110 and destroys it (as it is transmitted on the same frequency, namely f4, and, most likely, in the same time slots).

Once a communication has been established, the communication between the Master MS 110 and the Slave MSs 112, 114 is routed via all of the intermediary DM-Repeater units in a similar manner, as illustrated. For example, if the user of MS Slave-1 112 starts to talk, the Slave MS transmits speech on the uplink (f3) channel to its serving Repeater, Repeater 'D' 152. The speech communication is then routed round the DM-Repeater network, i.e. Repeater 'E' 162, Repeater 'F' 172 and Repeater 'G' 182 to MS Slave-2 114. Also, the same communication is passed on from Repeater 'G' 182, through Repeater 'H' 192 to Master Repeater 'A' 122, which in turn forwards the communication to Master MS 110. Note that three MSs are shown for clarity purposes only. In practice, a large number of MSs may be supported by the DM-Repeater network.

In an enhancement to the preferred embodiment of the present invention, it is envisaged that pre-emption and communication hand-over between DM-Repeaters is supported. As known in the art, pre-emption is a mechanism that is sometimes provided for in PMR systems where one MS may pre-empt an already occupied channel for a higher priority, say an emergency, call. Such services may be implemented in the communication link indicated by the dashed arrow. This final link will effectively be dynamically set as between the farthest Repeater and the Master Repeater in the communication chain, i.e. Repeater 192 located immediately prior to the Master Repeater 122, which is therefore the last Repeater to receive communication from the Master Repeater 122.

In accordance with a further enhanced embodiment of the present invention, for an expanded chain of DM-Repeaters, the system employs a frequency reuse capability when the distance between two DM-Repeaters using the same frequency is far enough apart. In this context, "Frequency Reuse" indicates areas where reusing a previously used frequency is allowed. In FIG. 1, Repeater 'A' 122 communicates to Repeater 'E' 162 using frequencies f1, f2, f3 and f4. Frequency re-use of these frequencies f1, f2, f3 and f4 is re-applied in communications from Repeater 'E' 162 to Repeater 'H' 192.

Preferably, the decision on whether to and, if so, how to configure a reuse strategy is made at the time of configuring the DM-Repeater system. Such a decision is the responsibility of a System Administrator. In this manner, a set of such chained DM-Repeater units can easily be configured as an inexpensive DMO network. A skilled artisan will appreciate that it is much easier to configure a DM-Repeater network in accordance with the inventive concepts herein described, than a TETRA-TMO network.

Although the preferred embodiment of the present invention is described with regard to a single chain of DM-Repeaters, it is envisaged that one or more further Repeaters may be coupled to one or more of the Repeaters in the single chain. In this manner, the chain of DM-Repeaters can be expanded to cover areas outside of the chain.

Further, DM-Repeaters can be configured in a tree-like structure, such that branches of communication links extend outwards from the single chain. Alternatively the DM-Repeaters in the branch may form a further loop, which is configured to attach back into the single chain.

Thus, a skilled artisan will appreciate that any number of configurations can be adopted to expand the communication coverage area supported by the DM-Repeater network. Preferably, the DM-Repeaters are each configured to receive communications on the transmit frequency of the one or more preceding DM-Repeaters.

A single Type 1B DM-Repeater is essentially either a stationary, portable or mobile DMO unit, which is capable of receiving RF signals through one channel, amplify those signals and re-transmit the RF signals on another channel. Notably, the inventors of the present invention propose utilizing the fact that the DM-Repeater's transmit/receive frequencies are not legislated in the TETRA standard, and can be configured according to the available frequency ranges. A Type 1B DM-Repeater is particularly preferred in that it is also able to receive transmissions on a first frequency and re-transmit the received information on a second distal frequency. The second frequency is typically separated from the first frequency by the system's 'duplex spacing'.

In some embodiments, particularly where there is a need to ensure that there is no interference between the various frequencies employed in the DM-Repeater network, a network operator may apply some flexibility to the allocation of frequencies, such that a strict adherence to duplex spacing is not followed. In this manner, the DM-Repeater system may be configured to enable it to be readily and easily expanded or reduced, and more easily allow configuration of a closed loop of Repeaters.

For example, as the expanded DM-Repeater system is configured so that one DM-Repeater's transmission frequency is another DM-Repeater's reception frequency, it becomes possible to concatenate Type 1B DM-Repeater units. In the illustrated case in FIG. 1, a series of TETRA DM frequencies could be the following:
f1 = 410 MHz (i.e. any arbitrary base freq. bF),
f2 = 411.6 MHz (i.e. bF + (1.6 MHz * 1)),
f3 = 413.2 MHz (bF + (1.6 MHz * 2)), and
f4 = 408.4 MHz (bF + (1.6 MHz * 3))
using the minimal Duplex Spacing value allowed in the TETRA standard, of 1.6 MHz (see paragraph 10.3.13 "Spacing of uplink" in the ETSI EN 300 396-4).

Thus, in a TETRA domain, the reserved values of the Duplex Spacing field can be used to fine-tune the gap between downlink and uplink frequencies. Alternatively, the entire Duplex Spacing scale (field) can be completely redefined according to operational needs, ignoring the TETRA dictation altogether.

It is within the contemplation of the invention that the proposed DM-Repeater network is also able to supplement and augment a primary SwMI system, and in a number of foreseeable applications to replace it.

In a yet further enhancement of the present invention, the DM-Repeaters are configured as mobile, for example by mounting on a vehicle. In this manner, the coverage area and services offered throughout the whole network can be dynamically adjusted to meet communication needs at any instant in time. Thus, the DM-Repeater network is far more adaptable to changing communication environments. Furthermore, each DM-Repeater unit is preferably configured to allow its geographical position to change according to its operational needs, so long as it remains within range of the two DM-Repeater units that it is logically connected to in the chain.

Thus, the mobility of a number of, and preferably every, DM-Repeaters makes the entire network geographically relocateable, where the covered area may be moved to satisfy operational needs. By relocating individual DM-Repeater units, the covered area and its topology shape may be easily controlled.

For example, it is envisaged that in certain situations, it may be desirable to increase or reduce the size of the DM-Repeater network due to say, budget considerations.
In this regard, the DM-Repeater network configuration supports "re-scaleability" in that DM-Repeaters can be readily introduced into, or removed from, the DM-Repeater network according to the communication needs at any particular time. When such a network adjustment is made, the operational frequencies of the introduced and/or remaining DM-Repeaters may need to be adjusted to maintain acceptable frequency separation and ensure a closed loop system.

Consequently, the DM-Repeater network can also be relatively easily configured and deployed in the field. It may therefore be utilised as an interim measure to provide communication in a given geographic area, until a SwMI-based TMO system is implemented that offers a full range of services and features. Alternatively, a customer may prefer to implement a DM-Repeater network, due to its cost effectiveness when compared to the cost implications of deploying a standard SwMI-based network.

In the context of the present invention, the term 'closed loop' does not necessarily imply that each communication always travels the entire loop. It does imply, however, that potentially a message can traverse a full circle in a closed loop. In fact, the Repeater node, which is positioned furthest from the Master Repeater, would rarely transmit to the Master Repeater unless, for example, it conveys Random Access Request messages in its dedicated time slots.

Any DM-Repeater network topology is allowed, providing the entire DM chain forms a closed loop. A closed loop allows the transmission through any Repeater to reach any MS. Furthermore, a MS will maintain its slave or master link with the same DM-Repeater unit as long as it stays within range of that DM-Repeater unit. Notably, in the preferred embodiment of the present invention, this relationship between a MS and its serving DM-Repeater is maintained irrespective of the distance the MS is from another DM-Repeater unit. Thus, in this embodiment, it saves the burden of introducing an in-service Repeater re-selection protocol.

If such a protocol capability is desired, the MS would have to use additional procedures to evaluate the quality of the link to its serving Repeater, and, if the link's quality drops below a given quality threshold, the MS would have to attempt to find the best quality-wise link that it could establish with another Repeater. Such a protocol would typically involve scanning a given list of Repeater frequencies and additional protocol elements, in order to make it robust and effective. However, provision of such a capability would render it substantially cumbersome. Thus, whilst an MS is in an Idle Free state, the aforementioned feature would be advantageous, and the protocol would be much simpler to implement.

In a still further enhancement of the preferred embodiment of the present invention, it is envisaged that the MSs may be configured such that they are able to roam between DM-Repeaters/coverage cells, i.e. configure the MSs to support repeater selection. In this regard, and advantageously, any MS may select the most appropriate Repeater to attach to, at any particular moment in time. Preferably, each of the DM Repeaters is configured to emit its own 'presence signal', on its Slave Link's frequency. In this manner, the roaming MSs are able to better identify their preferred serving DM-Repeater.

Preferably, the DM MSs are adapted such that they are able to scan a list of DM-Repeater Slave link frequencies in order to maintain communication in an ongoing call when travelling across to another DM-Repeater cell. In this regard, every DM MS is preferably pre-programmed with an appropriate frequency scan list to attempt to listen in to an ongoing call. Usually, such scanning is performed when the MS is powered on and has no knowledge of the channel state.

In a still further enhancement of the preferred embodiment of the present invention, it is envisaged that the MSs may be associated to an area dependent on a class/priority. Each MS may be pre-programmed with a priority level prior to going live on the DM system.

Alternatively, or in addition, each MS may be pre-programmed to dynamically identify its distance from the Master MS after going live on the DM system and associate its distance with a priority level. The priority level may be variable and, in either case, be based on a perceived distance to a determined master MS 110. The priority level may be input to its transmission request opportunity set.

Thus, in this embodiment, a MS's chances of successfully participating in a call request is related to its priority level, which in turn is dependent upon its perceived distance from the Master MS 110. For example, to allow equal access to the available DM communication resource, the closer the Slave MS 112 is to the Master MS 110 the farther its first valid transmission opportunity is. Therefore, MSs are provided with roughly the same chance of acquiring or using the channel, regardless of their distance from the Master MS.

It is also worth noting that the further a Slave MS is positioned from the Master MS, the longer it takes for a message to reach it. However, in such situations, the shorter it is for a random request, from a Slave MS to reach the Master MS, since all messages follow the same loop direction.

As in the conventional use of a DM-Repeater unit, service coverage area is limited, and the range of offered services is constrained. However, the proposed communication system supporting a deployed DM-Repeater network offers customers with modest means, the opportunity to acquire a low-cost, adjustable, easily relocateable communication network, without incurring prohibitive costs.

A skilled artisan will appreciate that generally two adjacent DM-Repeater units will be configured to use different transmission frequencies, so as to avoid interference experienced by any MS within range of both Repeaters. Furthermore, the DM-Repeater units are preferably regenerative units, i.e. they decode and reencode received speech and signalling bursts which they receive (one slot's worth each time), to improve the overall link performance.

Although the invention is described with reference to the TETRA DMO Repeater standard, it is within the contemplation of the invention that the inventive concepts described herein apply to any wireless DMO communication system.

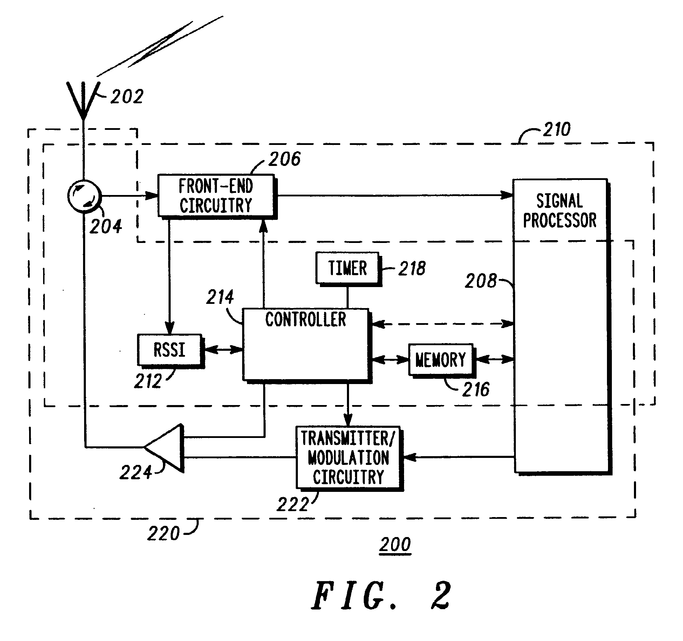

Referring now to FIG. 2, a block diagram of a DM-Repeater unit 200, adapted to support the inventive concepts of the preferred embodiments of the present invention, is illustrated. The DM-Repeater unit 200 contains an antenna 202 preferably coupled to a duplex filter or antenna switch 204 that provides isolation between a receiver chain 210 and a transmitter chain 220 within the DM-Repeater unit 200. As known in the art, the receiver chain typically includes receiver front-end circuitry 206 (effectively providing reception, filtering and intermediate or base-band frequency conversion). The front-end circuit is serially coupled to a signal processing function 208. The signal processing function typically performs a minimum of signal processing activities, such as, decoding, demodulating.

The receiver chain may include received signal strength indicator (RSSI) circuitry 212 (shown coupled to the receiver front-end 206, although the RSSI circuitry 212 could be located elsewhere within the receiver chain). The RSSI circuitry is coupled to a controller 214. In this way, the controller 214 may therefore receive bit error rate (BER) or frame error rate (FER) data from recovered information, to determine which supported MSs are able to transmit/receive signals of a sufficiently high level to facilitate communications. The controller 214 is also coupled to the receiver front-end circuitry 206 and the signal processing function 208 (generally realised by a digital signal processor (DSP)). The controller 214 is coupled to the memory device 216 for storing operating regimes, such as decoding/encoding functions and the like. A timer 218 is typically coupled to the controller 214 to control the timing of operations (transmission or reception of time-dependent signals) within the DM-Repeater unit 200.

As regards the transmit chain 220, this essentially includes a transmitter/modulation circuit 222 that is used to re-format (modulate, encode, etc.) received signals for re-transmission. Thereafter, any transmit signal is passed through a power amplifier 224 to be radiated from the antenna 202. The transmitter/modulation circuitry 222 and the power amplifier 224 are operationally responsive to the controller, with an output from the power amplifier 224 coupled to the duplex filter or antenna switch 204. The transmitter/modulation circuitry 222 and receiver front-end circuitry 206 comprise frequency up-conversion and frequency downconversion functions (not shown).

In particular, the operation of the signal processing unit 208 has been adapted to modify the standard repeater protocol so that each repeater knows its position in the chain, in relation to the Master Repeater that directly listens to the Master MS. For example, a preferred embodiment of the present invention utilizes unused bits in the RF burst to indicate a count of the number of DM-Repeater units in the chain from the Master DM-Repeater unit. Thus, in this example, when a communication is passed between DM Repeaters, from a Master MS to one or more Slave MSs, each intermediate Repeater increments the 'bit counter/indication' to signify that DM-Repeater's location in the chain. Clearly, the Master Repeater unit may be any of the DM-Repeater units, dependent upon which one supports the (master) MS that wishes to initiate the call.

Furthermore, the operation of the signal processing unit 208 has been adapted to continually attempt to ascertain its position in the chain of Repeaters, i.e. relative to any active Master Repeater. In addition, the operation of the signal processing unit 208 has preferably been adapted to monitor a transmission of the next-in-line Repeater. In this manner, the DM-Repeater 200 is able to determine whether the transmission chain is broken. Doing so will facilitate carrying out the chore of verifying whether or not the monitoring Repeater is positioned directly in front (or, perhaps, behind) the Master Repeater, in which case it must not transmit to the Master Repeater lest it corrupt and frustrate the Master MS' transmissions. As indicated earlier, the restriction preferably imposed on such transmissions does not include Random Access Requests, i.e. Pre-emption and Changeover requests. Also, the operation of the signal processing unit 208 has been adapted to keep track of MSs attached to it by periodically probing for any possibly attached MS(s).

Of course, the various components within the DM Repeater unit 200 can be realised in discrete or integrated component form, with an ultimate structure therefore being merely dependent upon design/complexity/size/power considerations, etc.

Although the preferred embodiment of the present invention is described with reference to mobile DM-Repeater units, it is envisaged that one or more DM-Repeater units may be stationary, for example to ensure coverage in a communication-critical area such as the communication control room for one or more emergency services.

Furthermore, the preferred embodiment has been described with reference to eight DM-Repeaters supporting communication in eight cells. A skilled artisan will appreciate that the inventive concepts can be applied to three or more DM-Repeaters, which are configured in such a manner so as to form a closed loop of communications.

In a further embodiment of the present invention, it is envisaged that a DM system may be created using new closed loops (Branch Loops), stemming from a single Repeater node (Root Repeater Node: RRN) and terminating either with the Root Repeater or with the Master Repeater. An advantage in this embodiment is that services are distributed to additional MSs without increasing the hop delays between Repeater nodes, as would be the case when a single chain is extended. Thus, messages actually travel across different branches almost concurrently. Furthermore, it is envisaged that such a design can be applied to secondary branches as well (branch loop nesting) without a significant degradation in performance.

It will be understood that the wireless communication system and wireless repeater communication unit as described above, provide at least one or more of the following advantages:
(i) The network configuration provides improved flexibility in that every DM-Repeater unit may be mounted on a vehicle, and therefore the overall coverage area can be dynamically adapted to changing communication environments.
(ii) The DM-Repeater network configuration supports "re-scalability", in that the DM-Repeater network can be readily expanded/reduced by adding or removing DM-Repeaters according to the communication system's needs at any particular time.
(iii) The DM-Repeater network configuration supports frequency reuse, to minimise wastage of valuable wireless resource.
(iv) The DM-Repeater network offers customers with modest means, the opportunity to acquire a low-cost communication network particularly when compared to the cost implications of deploying a standard SwMI-based network.
(v) The DM-Repeater network can be easily configured and deployed in the field.
(vi) The DM-Repeater network can provide essential backup communication support in times of crisis, when a major SwMI like system either partially or fully fails due to hostile activity
(vii) The DM-Repeater network can be quickly deployed aboard sea vessels at sea, where no Trunked systems may be practically installed.

Whilst specific, and preferred, implementations of the present invention are described above, it is clear that one skilled in the art could readily apply variations and modifications of such inventive concepts.

Thus, a communication system and a communication unit have been provided where the disadvantages described with reference to prior art arrangements have been substantially alleviated.

## Claims

1. A wireless communication system (100) comprising a plurality of wireless communication units (122, 132, 142, 152, 162, 172, 182, 192) forming a closed loop communication path for routing communications between the wireless communication units (122, 132, 142, 152, 162, 172, 182,), wherein in operation communications are passed between the communication units in the closed loop in a pre-determined direction around the loop; and **characterised in that** the communication units comprise direct mode repeaters (122, 132, 142, 152, 162, 172, 182, 192) each of which is operable to serve at least one wireless communication mobile station (110, 112, 114) and the repeaters are operable to provide sending of a direct mode communication from a first mobile station (110) served by a first one of the repeaters (122) to a second mobile station (112) served by a second one of the repeaters (152) by sending the communication from the first mobile station to the first repeater (122) then around the loop of repeaters in the pre-determined direction to the second repeater (152) and then to the second mobile station (152).

2. A wireless communication system according to claim 1 wherein the repeaters are operable to provide sending of a direct mode communication from the second mobile station to the first mobile station by sending the communication from the second mobile station to the second repeater then around the loop of repeaters in said pre-determined direction to the first repeater and then to the first mobile station.

3. A wireless communication system according to claim 1 or claim 2 wherein each of the repeaters is operable to receive a communication on a first operating frequency from a preceding wireless repeater in the loop and to relay the communication to a succeeding repeater in the loop on a second operating frequency.

4. A wireless communication system (100) according to Claim 3, wherein the plurality of repeaters (122, 132, 142, 152, 162, 172, 182, 192) are configured to be operable with adjustable transmit and receive frequencies so that a closed loop of selected frequencies can be formed.

5. A wireless communication system according to any one preceding claim wherein the respective first operating frequencies or the second operating frequencies or both of different repeaters in the closed loop vary.

6. A wireless communication system (100) according to any one preceding Claim, wherein the plurality of repeaters (122, 132, 142, 152, 162, 172, 182, 192) are configured to employ re-use around the closed loop by at least two non-adjacent repeaters of the same first operating frequency or the same second operating frequency or both.

7. A wireless communication system (100) according to any one preceding Claim, wherein a number of the plurality of repeaters (122, 132, 142, 152, 162, 172, 182, 192) are mobile wireless repeater communication units.

8. A wireless communication system (100) according to any one preceding Claim, wherein each wireless repeater is configured to transmit a presence signal on its transmit frequency to wireless subscriber communication units within its respective coverage area.

9. A wireless communication system (100) according to any one preceding Claim, wherein each of the mobile stations (112, 114) is operable to assign to itself a priority level based on a perceived distance to another mobile station (110) operating as a master station.

10. A system according to claim 10 wherein the priority level relates to a transmission request opportunity set.

11. A wireless communication system (100) according to any one preceding Claim, wherein the closed loop is adjustable whereby one or more wireless repeaters is/are capable of being dynamically added to or removed from the closed loop of the wireless communication system (100).

12. A wireless communication system (100) according to any one preceding Claim, wherein the communication units and the repeaters are operable in accordance with the TETRA direct mode communication protocol.

13. A wireless communication system (100) according to Claim 13, wherein one or more of the wireless repeaters is/are a TETRA Type 1B DM-Repeaters.

14. A wireless communication repeater (122, 152, 182) adapted to operate as one of the repeaters in the wireless communication system (100) according to any one of the preceding Claims.

15. A method of operation in a system according to any one of the preceding claims comprising the steps of routing communications between the wireless communication units (122,132, 142, 152, 162, 172, 182,) in a manner such that communications are passed between the communication units in the closed loop in a pre-determined direction around the loop; and **characterised in that** the communication units comprise direct mode repeaters (122, 132, 142, 152, 162, 172, 182, 192) each of which is operable to serve at least one wireless communication mobile station (110, 112, 114) and the method comprises sending of a direct mode communication from a first mobile station (110) served by a first one of the repeaters (122) to a second mobile station (112) served by a second one of the repeaters (152) by sending the communication from the first mobile station to the first repeater (122) then around the loop of repeaters in the pre-determined direction to the second repeater (152) and then to the second mobile station (152).

## Patentansprüche

1. Drahtloses Kommunikationssystem (100) umfassend eine Vielzahl von drahtlosen Kommunikationseinheiten (122, 132, 142, 152, 162, 172, 182, 192), die einen geschlossenen Schleifenkommunikationspfad zum Routen von Kommunikationen zwischen den drahtlosen Kommunikationseinheiten (122, 132, 142, 152, 162, 172, 182, 192) bilden, wobei die Kommunikationen im Betrieb zwischen den Kommunikationseinheiten in der geschlossenen Schleife in einer vorherbestimmten Richtung um die Schleife herum weitergegeben werden; und **dadurch gekennzeichnet, dass** die Kommunikationseinheiten Direktbetrieb-Repeater (122, 132, 142, 152, 162, 172, 182, 192) umfassen, die jeweils geeignet sind, zumindest eine mobile drahtlose Kommunikationsstation (110, 112, 114) zu versorgen, und die Repeater dazu geeignet sind, das Senden einer Direktbetriebskommunikation von einer ersten mobilen Station (110), die von einem Ersten der Repeater (122) versorgt wird, zu einer zweiten mobilen Station (112), die von einem Zweiten der Repeater (152) versorgt wird, durch das Senden der Kommunikation von der ersten mobilen Station zu dem ersten Repeater (122), dann um die Schleife aus Repeatern in der vorherbestimmten Richtung herum zu dem zweiten Repeater (152) und dann zu der zweiten mobilen Station (152) bereitzustellen.

2. Drahtloses Kommunikationssystem gemäß Anspruch 1, wobei die Repeater geeignet sind, das Senden einer Direktbetriebskommunikation von der zweiten mobilen Station zu der ersten mobilen Station durch das Senden der Kommunikation von der zweiten mobilen Station zu dem zweiten Repeater, dann um die Schleife aus Repeatern in der vorherbestimmten Richtung herum zu dem ersten Repeater und dann zu der ersten mobilen Station bereitzustellen.

3. Drahtloses Kommunikationssystem gemäß Anspruch 1 oder Anspruch 2, wobei jeder der Repeater geeignet ist, eine Kommunikation auf einer ersten Betriebsfrequenz von einem vorhergehenden drahtlosen Repeater in der Schleife zu empfangen und die Kommunikation an einen nachfolgenden Repeater in der Schleife auf einer zweiten Betriebsfrequenz weiterzuleiten.

4. Drahtloses Kommunikationssystem (100) gemäß Anspruch 3, wobei die Vielzahl der Repeater (122, 132, 142, 152, 162, 172, 182, 192) dazu eingerichtet sind, mit einstellbaren Sende- und Empfangsfrequenzen funktionsfähig zu sein, so dass eine geschlossene Schleife aus ausgewählten Frequenzen gebildet werden kann.

5. Drahtloses Kommunikationssystem gemäß einem der vorhergehenden Ansprüche, wobei die jeweiligen ersten Betriebsfrequenzen oder die zweiten Betriebsfrequenzen oder beide von verschiedenen Repeatern in der geschlossenen Schleife variieren.

6. Drahtloses Kommunikationssystem (100) gemäß einem der vorhergehenden Ansprüche, wobei die Vielzahl von Repeatern (122, 132, 142, 152, 162, 172, 182, 192) dazu eingerichtet sind, eine Wiederverwendung derselben ersten Betriebsfrequenz oder derselben zweiten Betriebsfrequenz oder beider um die Schleife herum durch wenigstens zwei nicht benachbarte Repeater zu nutzen.

7. Drahtloses Kommunikationssystem (100) gemäß einem der vorhergehenden Ansprüche, wobei eine Anzahl der Vielzahl der Repeater (122, 132, 142, 152, 162, 172, 182, 192) mobile drahtlose Repeater-Kommunikationseinheiten sind.

8. Drahtloses Kommunikationssystem (100) gemäß einem der vorhergehenden Ansprüche, wobei jeder der drahtlosen Repeater dazu eingerichtet ist, ein Präsenzsignal auf seiner Sendefrequenz zu drahtlosen Teilnehmer-Kommunikationseinheiten innerhalb seines jeweiligen Versorgungsbereiches zu senden.

9. Drahtloses Kommunikationssystem (100) gemäß einem der vorhergehenden Ansprüche, wobei jede der mobilen Stationen (112, 114) dazu geeignet ist, sich selbst eine Prioritätsstufe basierend auf einem wahrgenommenen Abstand zu einer anderen mobilen Station (110), die als Hauptstation arbeitet, zuzuordnen.

10. System gemäß Anspruch 9, wobei die Prioritätsstufe mit einem Gelegenheitssatz der Sendeanforderung ("transmission request opportunity set") zusammenhängt.

11. Drahtloses Kommunikationssystem (100) gemäß einem der vorhergehenden Ansprüche, wobei die geschlossene Schleife veränderlich ist, wodurch einer oder mehrere der drahtlosen Repeater fähig ist/sind, dynamisch zu der geschlossenen Schleife des drahtlosen Kommunikationssystems (100) hinzugefügt oder entfernt zu werden.

12. Drahtloses Kommunikationssystem (100) gemäß einem der vorhergehenden Ansprüche, wobei die Kommunikationseinheiten und die Repeater in Übereinstimmung mit dem Kommunikationsprotokoll des TETRA Direktbetriebs ("TETRA direct mode communication protocol") funktionsfähig sind.

13. Drahtloses Kommunikationssystem (100) gemäß Anspruch 13, wobei einer oder mehrere der drahtlosen Repeater ein TETRA Typ 1 B DM-Repeater ("TETRA Type 1 B DM-Repeaters") ist/sind.

14. Drahtloser Kommunikations-Repeater (122, 152, 182), der dazu eingerichtet ist, als einer der Repeater in dem drahtlosen Kommunikationssystem (100) gemäß einem der vorhergehenden Ansprüche zu arbeiten.

15. Verfahren zum Betreiben eines Systems gemäß einem der vorhergehenden Ansprüche umfassend die Schritte des Routens von Kommunikationen zwischen den drahtlosen Kommunikationseinheiten (122, 132, 142, 152, 162, 172, 182, 192) in einer Weise, so dass Kommunikationen zwischen den Kommunikationseinheiten in der geschlossenen Schleife in einer vorherbestimmten Richtung um die Schleife herum weitergeleitet werden; und **dadurch gekennzeichnet, dass** die Kommunikationseinheiten Direktbetrieb-Repeater (122, 132, 142, 152, 162, 172, 182, 192) umfassen, die jeweils geeignet sind, zumindest eine mobile drahtlose Kommunikationsstation (110, 112, 114) zu versorgen, und das Verfahren, das Senden einer Direktbetriebskommunikation von einer ersten mobilen Station (110), die von einem Ersten der Repeater (122) versorgt wird, zu einer zweiten mobilen Station (112), die von einem Zweiten der Repeater (152) versorgt wird, durch das Senden der Kommunikation von der ersten mobilen Station zu dem ersten Repeater (122), dann um die Schleife aus Repeatern in der vorherbestimmten Richtung herum zu dem zweiten Repeater (152) und dann zu der zweiten mobilen Station (152) umfasst.

## Revendications

1. Système de communication sans fil (100) comprenant une pluralité d'unités de communication sans fil (122, 132, 142, 152, 162, 172, 182, 192) formant une voie de communication en boucle fermée pour le routage de communications entre les unités de communication sans fil (122, 132, 142, 152, 162, 172, 182, 192), dans lequel, en fonctionnement, les communications sont transférées entre les unités de communication de la boucle fermée, dans une direction prédéterminée autour de la boucle ; et **caractérisé en ce que** les unités de communication comprennent des répéteurs en mode direct (122, 132, 142, 152, 162, 172, 182, 192) qui peuvent chacun fonctionner de façon à desservir au moins une station mobile de communication sans fil (110, 112, 114) et les répéteurs peuvent fonctionner de façon à permettre l'envoi d'une communication en mode direct d'une première station mobile (110) desservie par un premier des répéteurs (122) à une deuxième station mobile (112) desservie par un deuxième des répéteurs (152), par envoi de la communication de la première station mobile au premier répéteur (122) puis, autour de la boucle de répéteurs, dans la direction prédéterminée, au deuxième répéteur (152), puis à la deuxième station mobile (152).

2. Système de communication sans fil selon la revendication 1, dans lequel les répéteurs peuvent fonctionner de façon à permettre l'envoi d'une communication en mode direct de la deuxième station mobile à la première station mobile, par envoi de la communication de la deuxième station mobile au deuxième répéteur puis, autour de la boucle de répéteurs, dans ladite direction prédéterminée, au premier répéteur, puis à la première station mobile.

3. Système de communication sans fil selon la revendication 1 ou la revendication 2, dans lequel chacun des répéteurs peut fonctionner de façon à recevoir une communication sur une première fréquence de fonctionnement en provenance d'un répéteur sans fil précédent sur la boucle et pour relayer la communication à un répéteur suivant sur la boucle, sur une deuxième fréquence de fonctionnement.

4. Système de communication sans fil (100) selon la revendication 3, dans lequel la pluralité de répéteurs (122, 132, 142, 152, 162, 172, 182, 192) sont configurés pour pouvoir fonctionner avec des fréquences de transmission et de réception ajustables de telle sorte qu'une boucle fermée de fréquences sélectionnées puisse être formée.

5. Système de communication sans fil selon l'une quelconque des revendications précédentes, dans lequel les premières fréquences de fonctionnement respectives ou les deuxièmes fréquences de fonctionnement respectives, ou les deux, de répéteurs différents de la boucle fermée varient.

6. Système de communication sans fil (100) selon l'une quelconque des revendications précédentes, dans lequel la pluralité de répéteurs (122, 132, 142, 152, 162, 172, 182, 192) sont configurés pour employer une réutilisation, autour de la boucle fermée, par au moins deux répéteurs non adjacents, de la même première fréquence de fonctionnement ou de la même deuxième fréquence de fonctionnement, ou des deux.

7. Système de communication sans fil (100) selon l'une quelconque des revendications précédentes, dans lequel un certain nombre de la pluralité de répéteurs (122, 132, 142, 152, 162, 172, 182, 192) sont des unités de communication de type répéteur sans fil mobile.

8. Système de communication sans fil (100) selon l'une quelconque des revendications précédentes, dans lequel chaque répéteur sans fil est configuré pour émettre un signal de présence sur sa fréquence d'émission, à destination d'unités de communication d'abonné sans fil se trouvant dans sa zone de couverture respective.

9. Système de communication sans fil (100) selon l'une quelconque des revendications précédentes, dans lequel chacune des stations mobiles (112, 114) peut fonctionner de façon à s'attribuer un niveau de priorité en fonction d'une distance perçue par rapport à une autre station mobile (110) fonctionnant en tant que station maîtresse.

10. Système selon la revendication 9, dans lequel le niveau de priorité concerne un ensemble d'opportunités de demandes de transmission.

11. Système de communication sans fil (100) selon l'une quelconque des revendications précédentes, dans lequel la boucle fermée est ajustable, de sorte qu'un ou plusieurs répéteurs sans fil peuvent être dynamiquement ajoutés à la boucle fermée du système de communication sans fil (100) ou retirés de celle-ci.

12. Système de communication sans fil (100) selon l'une quelconque des revendications précédentes, dans lequel les unités de communication et les répéteurs peuvent fonctionner selon le protocole de communication en mode direct TETRA.

13. Système de communication sans fil (100) selon la revendication 13, dans lequel un ou plusieurs des répéteurs sans fil sont des répéteurs DM TETRA de type 1B.

14. Répéteur de communication sans fil (122, 152, 182) adapté pour jouer le rôle de l'un des répéteurs dans le système de communication sans fil (100) selon l'une quelconque des revendications précédentes.

15. Procédé de fonctionnement dans un système selon l'une quelconque des revendications précédentes, comprenant les étapes de routage de communications entre les unités de communication sans fil (122, 132, 142, 152, 162, 172, 182, 192), de telle sorte que des communications soient transférées entre les unités de communication de la boucle fermée, dans une direction prédéterminée autour de la boucle ; et **caractérisé en ce que** les unités de communication comprennent des répéteurs en mode direct (122, 132, 142, 152, 162, 172, 182, 192) qui peuvent chacun fonctionner de façon à desservir au moins une station mobile de communication sans fil (110, 112, 114) et le procédé comprend l'envoi d'une communication en mode direct d'une première station mobile (110) desservie par un premier des répéteurs (122) à une deuxième station mobile (112) desservie par un deuxième des répéteurs (152), par envoi de la communication de la première station mobile au premier répéteur (122) puis, autour de la boucle de répéteurs, dans la direction prédéterminée, au deuxième répéteur (152), puis à la deuxième station mobile (152).
